# EUROPEAN PATENT SPECIFICATION

(11) **EP 2 050 891 B1**
(45) Date of publication and mention of the grant of the patent: **05.05.2010**
(21) Application number: 08166729.7
(22) Date of filing: 16.10.2008
(51) Int. Cl.: E04D 11/00

(54) **Green roof structure for a building, assembly of at least two similar such green roof structures, and method for providing a green roof on a roof**
Grüne Dachstruktur für ein Gebäude, Anordnung von mindestens zwei ähnlichen grünen Dachstrukturen und Verfahren zur Bereistellung von einem grünen Dach auf einem Dach
Structure de toit vert pour une construction, ensemble d'au moins deux structures de toit vert similaires, et procédé fournissant un toit vert sur un toit

(30) Priority: 16.10.2007 NL 1034527
(43) Date of publication of application: 22.04.2009
(73) Proprietor: ESHA Group B.V., 9744 TC Groningen (NL)
(72) Inventor: Zandvoort, Frits, 9628 AH, Siddeburen (NL)
(74) Representative: Hatzmann, Martin

(56) References cited:
- GB-A- 2 266 647

## Description

The invention relates to a green roof structure for a building. The invention also relates to an assembly of at least two similar such green roof structures. The invention further relates to a method for designing as at least one green roof at least one roof of at least one building.

A green roof, also called roof garden, is a roof provided with vegetation. In practice, green roofs are utilized for several reasons. Green roofs contribute for instance to, inter alia, the binding of particulate matter in urban areas, reducing warming-up of a city and enhancing the ecologic value and the value of perception of built-up areas.

Another important advantage of the use of green roofs is retaining precipitation (rainwater). This advantage becomes ever more important due to the climate change occurring nowadays, whereby frequency, intensity and duration of precipitation increase. During heavy showers peak loads are formed for sewer systems, which peak loads more and more often exceed the processing capacity of the sewer systems. This is a great problem in particular in urban areas where, as a rule, the greater part of the surface is surfaced and drains towards sewer systems. The consequences are, for instance, flooding streets, cellars and the like. Naturally, the problem can be dealt with by increasing the processing capacity of sewer systems, this is, however, very costly. As between one third and two thirds of the surfaced surface in such urban regions is formed by roofs of buildings, large scale use of green roofs can contribute to relieving the sewer systems.

With green roofs, so-called extensive and/or intensive vegetation can be used. Extensive vegetation comprises vegetation such as sedums, moss, herbs or the like for which only a thin layer of substrate of a few centimetres suffices. Extensive vegetation offers the advantage that it needs hardly any maintenance. In order to maintain extensive vegetation, as a rule, little more is required than an occasional small amount of water. By contrast, intensive vegetation comprises larger vegetation such as shrubs and trees planted in a thicker layer of substrate. As a rule, intensive vegetation requires relatively much maintenance, which is often undesirable on a roof.

In view of the above-mentioned function of retaining rainwater, extensive cover on a roof has the drawback that it can retain only little water. In order to increase the capacity for retaining water, the thin layer of substrate could be designed to be thicker for the extensive cover, this would however result in that in case of a large supply of water, the subsoil would become too wet for extensive vegetation. The fact is that extensive vegetation suffers when the soil is too wet. Although intensive vegetation on a roof has the advantage that it can hold more water, this suffers when the supply of water is too small.

Although known green roofs will unmistakably offer' an interesting contribution to the relief of sewer systems when utilized in large numbers, this contribution will still be limited. One reason is that known green roofs have a limited capacity for retaining the taken-up water. Another reason is that with known green roofs, the capacity for taking up water is limited. If, for instance, between a first and a second period of heavy precipitation, a rainless period of some days occurs, at the start of the second period of precipitation, the soil is often still so saturated with water taken up during the first period of precipitation that the water uptake capacity during the second period of precipitation is limited.

A green roof structure according to the preamble of claim 1 is known from GB2266647A.

It is an object of the invention to provide an efficient solution according to which a green roof is obtained having an improved capacity for retaining and/or taking up water.

To this end, according to the invention, a green roof structure according to claim 1 is provided.

The intermediate spaces between the pillars of the bearing construction layer offer a good capacity for retaining taken-up water in the reservoir. Owing to the regulating means, the amount of taken-up water can be regulated depending on the actual amounts of retained water and/or actual weather conditions and/or the forecast weather conditions. As a result, in times of no or little precipitation, water can be drained from the reservoir, so that the water uptake capacity of the reservoir is increased in anticipation of future precipitation.

A green roof structure according to the invention reveals itself particularly well when the vegetation is extensive vegetation. The fact is that owing to the water transmissive passage between substrate and the bearing construction layer, the substrate is drained well and the extensive vegetation does therefore not suffer from too large a supply of water in times of much precipitation. Furthermore, as already mentioned, extensive vegetation does not suffer from too small a water supply in times of little precipitation. The possibility of utilizing extensive vegetation further offers the advantage that virtually no maintenance is required, which is very welcome especially on roofs that are difficult to access. It is further advantageous that extensive vegetation requires only a thin layer of substrate.

Utilizing the means for vertical movement of at least the substrate for vegetation with respect to the roof surface has the advantage that the maximum volume of water stored in the reservoir without the water level reaching a substrate, is adjustable. As the bearing construction layer is designed to be at least partly floatable in water, the vertical movability is realized extremely simply and adjustment is energy-conserving and automatic.

The invention is also embodied in a method according to claim 6.

Specific embodiments of the invention have been laid down in the dependent claims.

In the following, the invention is further specified with reference to the schematic Figures in the appended drawing.
Fig. 1 shows a cross-section of a portion of an example of an embodiment of a green roof structure;
Fig. 2 shows a cross-section of a portion of an example of a different embodiment of a green roof structure;
Fig. 3 shows a portion of the example shown in Fig. 2 in perspective;
   The embodiments of Fig. 1, 2 and 3 do not comprise means for vertically moving the substrate. Therefore, these embodiments do not form part of the claimed invention.
Fig. 4 shows a cross-section of a portion of an example of an embodiment of a green roof structure according to the invention;
Fig. 5 shows the example of Fig. 4 again, however with the difference that a bearing construction layer of the green roof structure is in floating condition; and
Fig. 6 shows a building which is provided with an assembly of several green roof structures designed according to the invention.

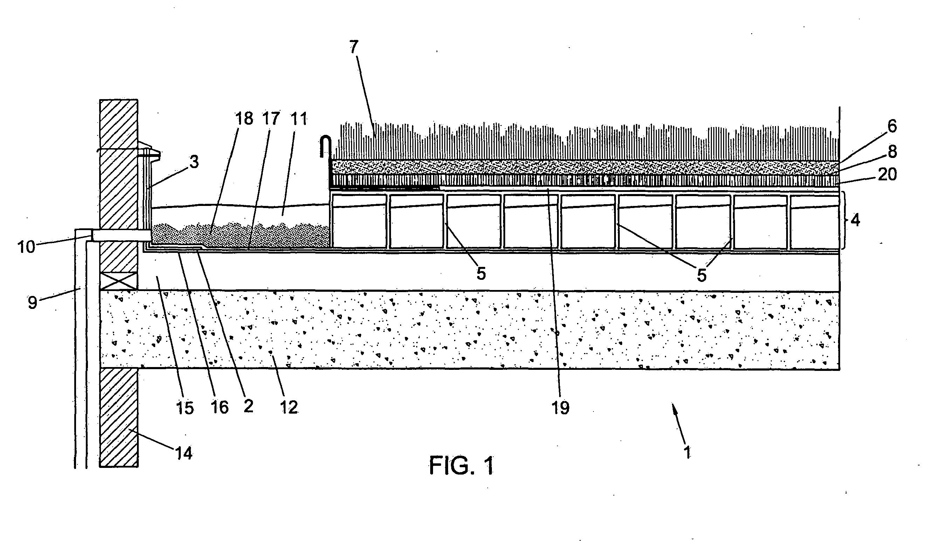

It is noted that parts in Figs. 1-6 which are similar for different embodiments of the invention, are sometimes indicated with the same reference numerals in the different embodiments.

Reference is first made to Fig. 1, in which a green roof structure 1 is shown. The green roof structure 1 comprises a water reservoir for collected rainwater 11, which reservoir comprises a watertight roof surface 2 extending substantially in two horizontal dimensions, which roof surface is contiguous at its edges in a watertight manner with upstanding watertight walls 3.

In the example shown, this is realized as follows. With reference numeral 12, a concrete storey floor of a building is indicated, which storey floor 12 is supported by a wall 14 of the building. On the storey floor 12, insulating material 15 is provided. On the insulating material 15, a bituminous vapour control layer 16 is provided. On the bituminous vapour control layer 16, a two-layer completely adhered roof covering 2 is applied, forming the watertight roof surface 2 in this example. However, other types of roof surfaces and other types of bases of roof surfaces are possible.

The green roof structure 1 further comprises a bearing construction layer 4, situated parallelly above the watertight roof surface 2, which comprises rigid pillars 5 having their longitudinal direction extending in thickness direction of the bearing construction layer, and wherein in each of the two horizontal dimensions, several specimen of these pillar 5 spaced apart in the respective dimension are arranged. The pillars may have been manufactured from various materials, for instance polypropylene. Optionally, the bearing construction layer 4 can comprise cross connections in different manners between the pillars. The structure may have been built up from separate, juxtaposed crates of polypropylene or of a different material. In the example shown, a protective mat 17 of, for instance, rubber is fitted between the roof surface 2 and the bearing construction layer 4. Further, in the area between the upstanding walls 3 and the bearing construction layer 4, a layer of gravel 18 is present on the roof surface 2.

The green roof structure 1 further comprises a substrate 6 for vegetation 7, situated parallelly above the bearing construction layer 4 and supported by the bearing construction layer, wherein a transition between the substrate and the bearing construction layer is water transmissive so that rain water 11 collected by the substrate can sink downwards via the substrate to intermediate spaces between the pillars 5 of the bearing construction layer. Various sorts of vegetation 7 can be utilized, both intensive vegetation and extensive vegetation. The substrate 6 can comprise, for instance, soil. Instead thereof or in addition thereto, the substrate can also be a spongy plastic material. In the example shown, the water transmissive transition between the substrate 6 and the bearing construction layer 4 is formed by a perforated, rubber protective mat 19 provided on the bearing construction layer, a drainage layer 20 of recycled foam rubber arranged on the protective mat 19 and a filter membrane 8 provided on the drainage layer 20 on which the substrate 6 is provided. The transition between the substrate and the bearing construction layer can however be designed to be water transmissive in various other manners, for instance in that the substrate 6 is of spongy plastic material and rests directly on the bearing construction layer 4.

The green roof structure 1 further comprises at least one water feed through means 9 for draining water from the reservoir and/or supplying water to the reservoir, and regulating means 10 for regulating, via the at least one water feed-through means 9, discharge and/or supply of water 11. In the example shown, this is realized with the aid of a discharge pipe 9, extending through the upstanding wall 3 shown, in which an adjustable valve 10 is situated. Through the adjustable valve 10, the amount of the water 11 retrained in the reservoir is adjustable, depending on, for instance, actual amounts of retained water and/or actual weather conditions and/or forecast weather conditions. Operating the valve 10 can for instance take place automatically on the basis of measuring results of sensors which measure the level of the water 11 in the reservoir and/or on the basis of weather forecasts.

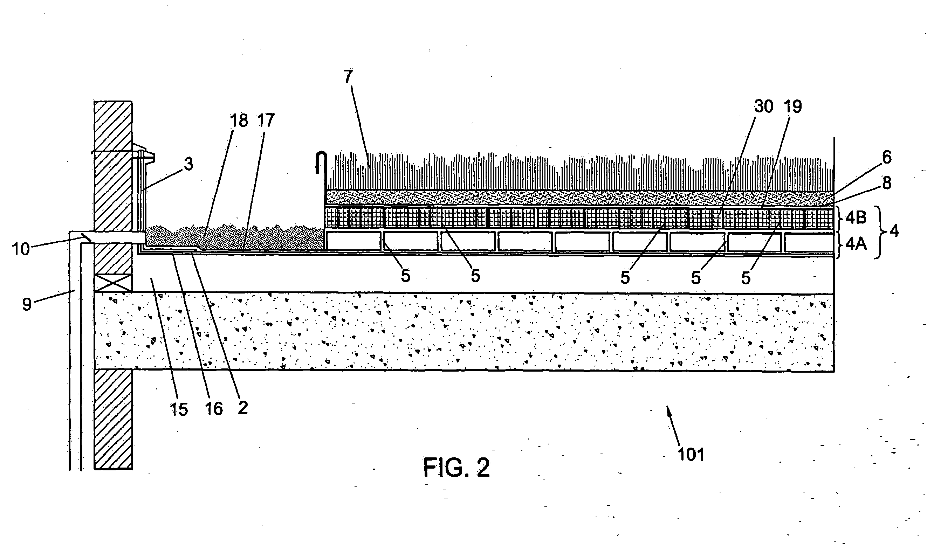

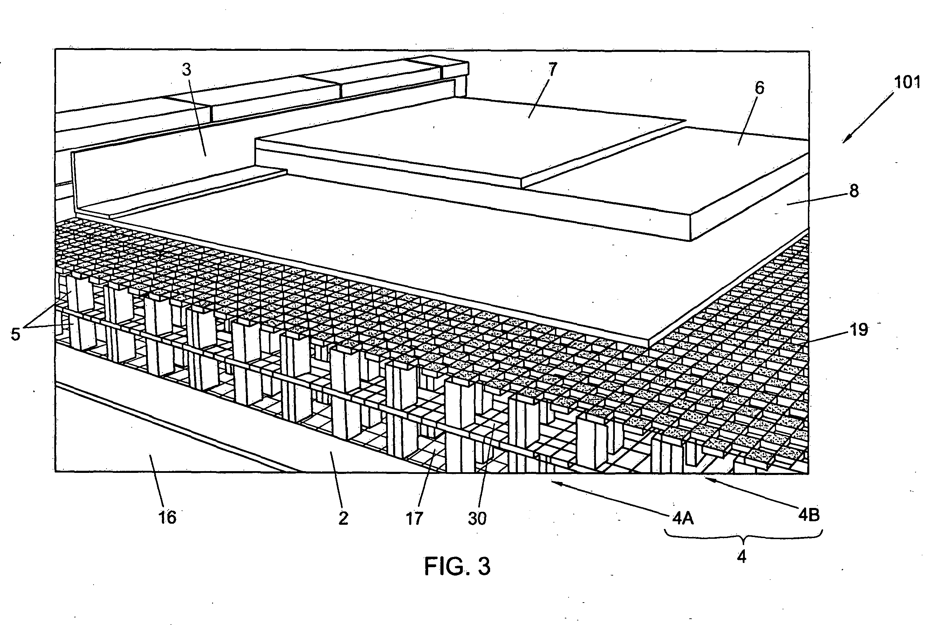

Reference is now made to Figs. 2 and 3 in which a green roof structure 101 according to a different embodiment of the invention is shown. A difference with the example shown in Fig. 1 is that with the green roof structure 101, in at least parts of the intermediate spaces between the pillars 5, spongy material 30 is present. The spongy material 30 can temporarily retain water 11 sinking downwards from the substrate 6, so that a delayed discharge of water is effected. The spongy material 30 can be present at different locations in the bearing construction layer 4. Preferably, the spongy material 30 is situated in the intermediate spaces such that parts of the roof surface 2 covered by the bearing construction layer 4 are at least partly free of the spongy material 30. In that case, water that is already delayed in discharge via the spongy material can, if desired, be discharged rapidly by opening the valve 10 in the discharge pipe 9. In the example shown in Fig.2, the roof surface 2 is free of the spongy material 30 in that the bearing construction layer 4 comprises two such bearing construction layers 4A and 4B placed one above the other, wherein the spongy material 30 is present only in the upper bearing construction layer 4b.

Incidentally, it is noted that another difference with the example in Fig. 1 is that with the green roof structure 101 of Figs. 1 and 2, the transition between the substrate 6 and the bearing construction layer 4 comprises no drainage layer 20.

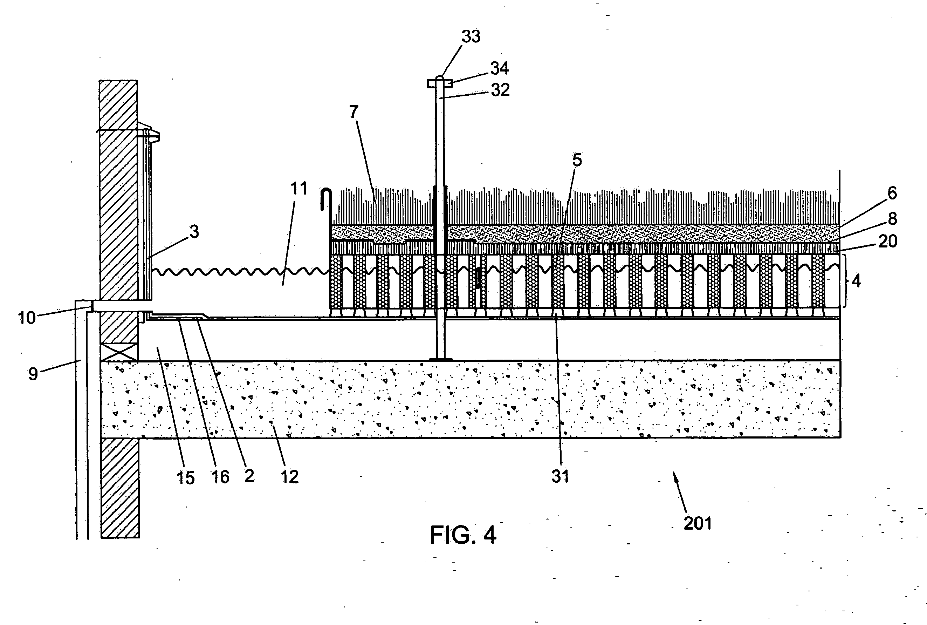

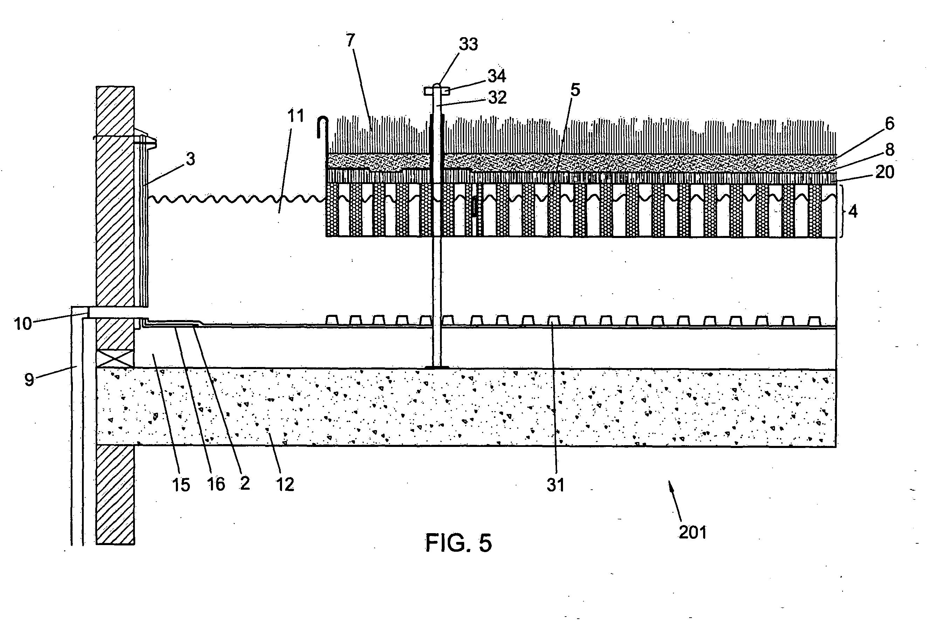

Reference is made now to Figs. 4 and 5 wherein a green roof structure 201 according to an embodiment of the invention is shown. A difference with the examples shown in Figs. 1 and 2 is that the green roof structure 201 comprises means for vertically moving at least the substrate 6 for vegetation with respect to the roof surface 2. An advantage of the use of such means is that the maximum volume of the water 11 stored in the reservoir without the water level reaching the substrate 6, is adjustable. The vertical movability can be effected out in various manners with the aid of various adjusting mechanisms.

The vertical movability is realized in that the bearing construction layer 4 is designed so as to be at least partly floatable in water. The fact is that thus, the vertical movability is realized particularly simply and adjustment is energy-conserving and automatic. Partly floatable design can be effected in different manners, for instance through the use of various floatable parts or accessories of the bearing construction layer 4. In the example of Figs. 4 and 5, the floatability is realized in that the pillars 5 of the bearing construction layer 4 are designed so as to be floatable. In Fig. 5, the bearing construction layer 4 of the green roof structure 201 is in floating condition, while in Fig. 4, the bearing construction layer 4 rests on a mat arranged on the roof surface 2, in this case a studded mat 31. In order to guide the bearing construction layer 4 during vertical movement, the green roof structure 201 is provided with a number of upstanding-poles 32 which are arranged in the reservoir and anchored in the storey floor 12. The poles 32 are provided with a safety anchor 33 and a blocking 34 preventing the bearing construction layer 4 from exceeding a maximum allowable highest position.

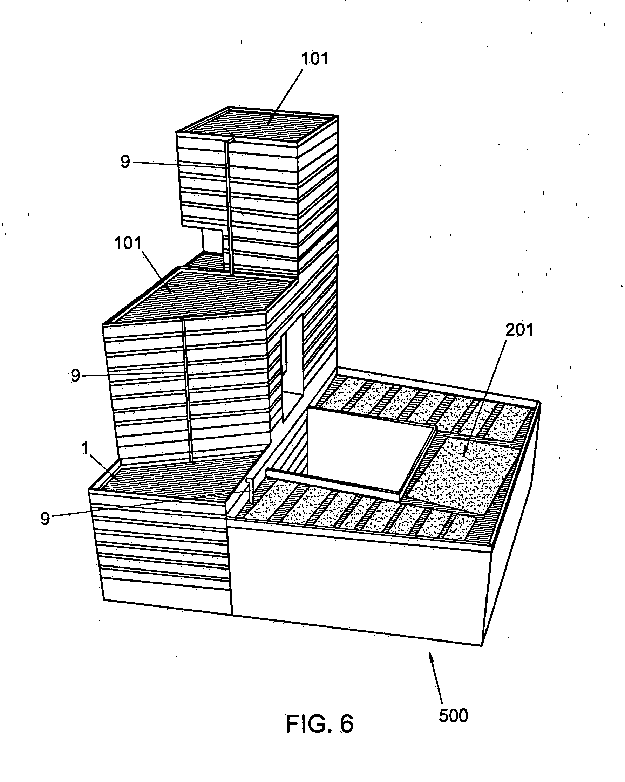

Reference is now made to Fig. 6, in which a building 500 provided with an assembly of several green roof structures 1, 101, 201 is shown, wherein, in operative condition, respective specimen of the water feed through means 9 of the respective green roof structures link up with each other for exchange of water 11 between the respective reservoirs of the respective green roof structures. It is noted that the roofs thus linked up with each other need not necessarily form part of one and the same building. Different roofs thus linked up with each other can also form part of different buildings. An advantage of roofs thus linked up with each other is that several roofs can cooperate for delayed discharge and storage of water. Also, relatively weak roofs, i.e. roofs on which no, or only a lightweight green roof is possible can thus participate.

The building 500 has four different roofs located at four different levels. In the example shown, with the two highest roofs of the building 500, green roof structures 101 are utilized, i.e., with which, for obtaining delayed water discharge, spongy material 30 is utilized. With the lowest roof, a green roof structure 201 is utilized, i.e. with which the maximum volume of water 11 stored in the reservoir without the water level reaching the substrate 6, is adjustable. With the remaining roof, a green roof structure 1 is utilized, i.e. with which no spongy material 30 is used. As a green roof structure of the type 201 typically has a large and adjustable capacity for taking up water, it is advantageous to use such a type of green roof structure downstream of other types of green roof structures.

It is noted that the above-mentioned examples of embodiments do not delimit the invention and that within the scope of the accompanying claims, various alternatives are possible. For instance, with an assembly of at least two green roof structures, water can also be discharged from a lower reservoir of a green roof structure of the assembly to a higher reservoir of another reservoir of another green roof structure of the assembly. No use is then made of gravity for draining the water, but this is to be effected by pumping the water up. Also, means can be provided for generating energy from water drained downward. In the example of Fig. 6, for instance, when the green roof structure 201 is drained, a turbine can be used for generating electric energy. However, within the scope of the claims other variants or modifications are possible too. These and similar alternatives are understood to fall within the framework of the invention as defined in the appended claims.

## Claims

1. Green roof structure for a building (500), comprising:
- a water reservoir for collected rain water (11), which reservoir comprises a watertight roof surface (2) extending substantially in two horizontal dimensions, which roof surface is contiguous at its edges in a watertight manner with upstanding watertight walls (3);
- a bearing construction layer (4), situated parallelly above the watertight roof surface, which comprises rigid pillars (5) having their longitudinal direction extending in thickness direction of the bearing construction layer and wherein in each of the two horizontal dimensions, several specimens of the said pillars spaced apart in the respective dimension are arranged;
- a substrate (6) for vegetation (7) situated parallelly above the bearing construction layer and borne by the bearing construction layer, wherein a transition (8, 19, 20) between the substrate and the bearing construction layer is water transmissive so that rain water collected by the substrate can sink downwards via the substrate to intermediate spaces between the pillars of the bearing construction layer;
- at least one water feed-through means (9) for discharging water from and/or supplying water to the reservoir; and
- regulating means (10) for regulating the discharge and/or supply of water via the at least one feed through means;
**characterized by** means for vertically moving at least the substrate (6) for vegetation with respect to the roof surface (2), wherein the vertical movability is realized in that the bearing construction layer (4) is designed to be at least partly floatable in water.

2. A green roof structure according to claim 1, wherein at least in parts of the intermediate spaces between the pillars (5) spongy material (30) is present.

3. A green roof structure according to claim 2, wherein the spongy material (30) is situated in the intermediate spaces such that parts of the roof surface (2) covered by the bearing construction layer (4) are at least partly free of the spongy material.

4. An assembly of at least one green roof structure (201) according to any one of the preceding claims and at least one green roof structure according to the preamble of claim 1, wherein in operative condition, respective specimens of the water feed-through means (9) of the respective green roof structures link up with each other for exchange of water (11) between the respective reservoirs of the respective green roof structures.

5. An assembly according to claim 4, comprising a first such green roof structure (201) with a first such roof surface and a second such green roof structure (1,101) with a second such roof structure, wherein the first roof surface is situated lower than the second roof surface and wherein the first green roof structure is a green roof structure according to any one of claims 1 - 3.

6. A method for providing at least one green roof on at least one roof of at least one building (500), wherein the at least one building is manufactured or adapted such that the at least one building comprises a green roof structure (201) according to any one of claims 1 - 3 or an assembly according to any one of claims 4-5.

## Patentansprüche

1. Dachgartenstruktur für ein Gebäude (500), umfassend:
- einen Wasserbehälter für gesammeltes Regenwasser (11), wobei der Behälter eine wasserdichte Dachfläche (2) aufweist, die sich im Wesentlichen in zwei horizontalen Dimensionen erstreckt, wobei die Dachfläche an ihren Kanten auf wasserdichte Weise an aufrecht stehende wasserdichte Wände (3) angrenzt;
- eine tragende Konstruktionsschicht (4), die sich parallel oberhalb der wasserdichten Dachfläche befindet, welche starre Pfosten (5) aufweist, deren Längsrichtung sich in Dickenrichtung der tragenden Konstruktionsschicht erstreckt, und wobei in jeder der zwei horizontalen Dimensionen mehrere Exemplare der Pfosten in der entsprechenden Dimension beabstandet angeordnet sind;
- ein Substrat (6) für Pflanzenbewuchs (7), das sich parallel oberhalb der tragenden Konstruktionsschicht befindet und durch die tragende Konstruktionsschicht getragen wird, wobei ein Übergang (8, 19, 20) zwischen dem Substrat und der tragenden Konstruktionsschicht wasserdurchlässig ist, so dass das durch das Substrat gesammelte Regenwasser abwärts durch das Substrat hindurch in Zwischenräume zwischen den Pfosten der tragenden Konstruktionsschicht absacken kann;
- mindestens eine Wasserdurchlasseinrichtung (9) zum Ablassen von Wasser aus dem Behälter und/oder Zuführen von Wasser in den Behälter; und
- eine Regulierungseinrichtung (10) zum Regulieren des Ablassens und/oder Zuführens von Wasser über die mindestens eine Durchlasseinrichtung;
**gekennzeichnet durch** Mittel zum vertikalen Bewegen von mindestens dem Substrat (6) für Pflanzenbewuchs in Bezug auf die Dachfläche (2), wobei die vertikale Bewegbarkeit derart ausgeführt ist, dass die tragende Konstruktionsschicht (4) derart gestaltet ist, dass sie zumindest teilweise auf Wasser schwimmfähig ist.

2. Dachgartenstruktur gemäß Anspruch 1, wobei zumindest in Teilen der Zwischenräume zwischen den Pfosten (5) schwammartiges Material (30) vorhanden ist.

3. Dachgartenstruktur gemäß Anspruch 2, wobei sich das schwammartige Material (30) derart in den Zwischenräumen befindet, dass Teile der durch die tragende Konstruktionsschicht (4) bedeckten Dachfläche (2) zumindest teilweise frei von dem schwammartigen Material sind.

4. Anordnung aus mindestens einer Dachgartenstruktur (201) gemäß einem der vorhergehenden Ansprüche und mindestens einer Dachgartenstruktur gemäß dem Oberbegriff des Anspruchs 1, wobei im Betriebszustand entsprechende Exemplare der Wasserdurchlasseinrichtung (9) der entsprechenden Dachgartenstrukturen miteinander verbunden sind, um zwischen den entsprechenden Behältern der entsprechenden Dachgartenstrukturen Wasser (11) auszutauschen.

5. Anordnung gemäß Anspruch 4, umfassend eine erste derartige Dachgartenstruktur (201) mit einer ersten derartigen Dachfläche und eine zweite derartige Dachgartenstruktur (1, 101) mit einer zweiten derartigen Dachfläche, wobei die erste Dachfläche niedriger als die zweite Dachfläche angeordnet ist, und wobei die erste Dachgartenstruktur eine Dachgartenstruktur gemäß einem der Ansprüche 1 - 3 ist.

6. Verfahren zur Bereitstellung mindestens eines Dachgartens auf mindestens einem Dach mindestens eines Gebäudes (500), wobei das mindestens eine Gebäude derart aufgebaut oder angepasst ist, dass das mindestens eine Gebäude eine Dachgartenstruktur (201) gemäß einem der Ansprüche 1 - 3 oder eine Anordnung gemäß einem der Ansprüche 4 - 5 aufweist.

## Revendications

1. Structure de toit vert pour un bâtiment (500) comprenant :
- un réservoir d'eau pour de l'eau de pluie collectée (11), lequel réservoir comprend une surface de toit (2) étanche s'étendant sensiblement dans deux dimensions horizontales, laquelle surface de toit est contiguë en ses arêtes de façon étanche à des murs étanches (3) se dressant vers le haut ;
- une couche de construction de support (4), située parallèlement au dessus de la surface de toit étanche, qui comprend des piliers (5) rigides ayant leur direction longitudinale qui s'étend dans la direction d'épaisseur de la couche de construction de support et dans chacune des deux dimensions horizontales, sont agencés plusieurs desdits piliers espacés dans la dimension respective;
- un substrat (6) pour végétation (7) situé parallèlement au dessus de la couche de construction de support et supportée par la couche de construction de support, une transition (8, 19, 20) entre le substrat et la couche de construction de support étant transmissive d'eau de telle sorte que l'eau de pluie collectée par le substrat peut couler vers le bas via le substrat jusqu'à des espaces intermédiaires entre les piliers de la couche de construction de support ;
- au moins un moyen de passage d'eau (9) pour écouler de l'eau depuis et/ou alimenter en eau le réservoir ; et
- des moyens de régulation (10) pour réguler l'écoulement et/ou l'alimentation en eau via le au moins un moyen de passage d'eau ;
**caractérisée par** des moyens de déplacement vertical d'au moins le substrat (6) pour végétation par rapport à la surface de toit (2), la capacité de déplacement vertical étant réalisée par le fait que la couche de construction de support (4) est conçue pour être au moins partiellement flottable dans l'eau.

2. Une structure de toit vert selon la revendication 1, dans laquelle dans au moins des parties des espaces intermédiaires entre les piliers (5) du matériau spongieux (30) est présent.

3. Une structure de toit vert selon la revendication 2, dans laquelle le matériau spongieux (30) est situé dans les espaces intermédiaires de sorte que des parties de la surface de toit (2) couvertes par la couche de construction de support (4) sont au moins partiellement dépourvues du matériau spongieux.

4. Un assemblage d'au moins une structure de toit vert (201) selon l'une quelconque des revendications précédentes et au moins une structure de toit vert selon le préambule de la revendication 1, dans lequel en condition de marche, des spécimens respectifs des moyens de passage d'eau (9) des structures de toit vert respectives se lient l'une à l'autre pour l'échange d'eau (11) entre les réservoirs respectifs des structures de toit vert respectives.

5. Un assemblage selon la revendication 4, comprenant une première telle structure de toit vert (201) avec une première telle surface de toit et une seconde telle structure de toit vert (1, 101) avec une seconde telle surface de toit, dans lequel la première surface de toit est située plus bas que la seconde surface de toit et dans lequel la première, structure de toit vert est une structure de toit vert selon l'une quelconque des revendications 1 à 3.

6. Un procédé de fourniture d'au moins un toit vert sur au moins un toit d'au moins un bâtiment (500), dans lequel le au moins un bâtiment est construit ou adapté de telle sorte que le au moins bâtiment comprend une structure de toit vert (201) selon l'une quelconque des revendications 1 à 3 ou un assemblage selon l'une quelconque des revendications 4 à 5.
